# EUROPÄISCHE PATENTSCHRIFT

(11) **EP 3 512 981 B1**
(45) Veröffentlichungstag und Bekanntmachung des Hinweises auf die Patenterteilung: **25.01.2023**
(21) Anmeldenummer: 17761890.7
(22) Anmeldetag: 06.09.2017
(51) Int. Cl.: C23C 22/83, C23C 22/34, C23C 22/44, C23C 22/78, B05D 1/34, B05D 1/36, C09D 7/61, C09D 5/08

(54) **VERBESSERTES VERFAHREN ZUR KORROSIONSSCHÜTZENDEN VORBEHANDLUNG EINER METALLISCHEN OBERFLÄCHE, WELCHE STAHL, VERZINKTEN STAHL, ALUMINIUM, EINE ALUMINIUMLEGIERUNG, MAGNESIUM UND/ODER EINE ZINK-MAGNESIUM-LEGIERUNG ENTHÄLT**
IMPROVED PROCESS FOR CORROSION-PROTECTING PRETREATMENT OF A METALLIC SURFACE CONTAINING STEEL, GALVANIZED STEEL, ALUMINUM, AN ALUMINUM ALLOY, MAGNESIUM AND/OR A ZINC-MAGNESIUM ALLOY
PROCÉDÉ AMÉLIORÉ DE PRÉTRAITEMENT DE PROTECTION ANTICORROSION D'UNE SURFACE MÉTALLIQUE QUI CONTIENT DE L'ACIER, DE L'ACIER GALVANISÉ, DE L'ALUMINIUM, UN ALLIAGE D'ALUMINIUM, DU MAGNÉSIUM ET/OU UN ALLIAGE DE ZINC ET DE MAGNÉSIUM

(30) Priorität: 15.09.2016 DE 102016217574
(43) Veröffentlichungstag der Anmeldung: 24.07.2019
(73) Patentinhaber: Chemetall GmbH, 60487 Frankfurt (DE)
(72) Erfinder: BIRKENHEUER, Stefan, 201315 Shanghai (CN); CHMIELEWSKI, Dietmar, 8590 Romanshorn (CH); HECKER, Carina, 60487 Frankfurt am Main (DE); SAUER, Oliver, 60487 Frankfurt am Main (DE); SCHATZ, Daniel, 60487 Frankfurt am Main (DE)
(74) Vertreter: BASF IP Association
(86) Internationale Anmeldenummer: PCT/EP2017/072316
(87) Internationale Veröffentlichungsnummer: WO 2018/050506

(56) Entgegenhaltungen:
- EP-A1- 1 426 466
- EP-A1- 1 447 460
- EP-A1- 1 643 009
- WO-A1-2011/029680
- US-A1- 2013 209 830
- US-A1- 2014 223 740

## Beschreibung

Die vorliegende Erfindung betrifft ein verbessertes Verfahren zur korrosionsschützenden Vorbehandlung einer metallischen Oberfläche, welche Stahl, verzinkten Stahl, Aluminium, eine Aluminiumlegierung, Magnesium und/oder eine Zink-Magnesium-Legierung enthält. Ferner betrifft sie eine Zusammensetzung zur Verbesserung der korrosionsschützenden Vorbehandlung einer solchen metallischen Oberfläche, ein Konzentrat zur Herstellung dieser Zusammensetzung, eine entsprechend beschichtete metallische Oberfläche sowie die Verwendung eines entsprechend beschichteten metallischen Substrats.

Die Beschichtung metallischer Oberflächen mit einer wässrigen Zusammensetzung, welche Titan-, Zirkonium- und Hafnium-Verbindungen, Organoalkoxysilane, deren Hydrolyse- und/oder Kondensationsprodukte sowie weitere Komponenten enthält, ist bekannt.

Durch die gebildeten Beschichtungen lässt sich ein Korrosionsschutz für die behandelten Metallsubstrate erzielen sowie eine gewisse Verbesserung hinsichtlich der Haftung weiterer Schichten wie Lacke.

Im Stand der Technik findet sich auch die Zugabe bestimmter säurestabiler Polymere zu den genannten Zusammensetzungen. Auf diese Weise lassen sich die Eigenschaften der gebildeten Schichten verbessern.

Jede der Druckschriften US 2014/223740 A1, EP 1426466 A1, WO 2011/029680 A1 und EP 1447460 A1 offenbart jeweils ein Verfahren zur korrosionsschützenden Behandlung einer metallischen Oberfläche, wobei die metallische Oberfläche mit einem Polymer auf Acrylbasis in Kontakt gebracht wird.

Es treten jedoch, insbesondere bei Oberflächen welche Stahl, verzinkten Stahl, Aluminium, eine Aluminiumlegierung, Magnesium und/oder eine Zink-Magnesium-Legierung enthalten, nach wie vor Probleme in Bezug auf die korrosive Unterwanderung auf, welche auch durch die Verwendung der erwähnten Polymere bislang nicht zufriedenstellend gelöst werden konnten.

Aufgabe der vorliegenden Erfindung war es daher, die Nachteile des Standes der Technik zu überwinden und für metallische Oberflächen, welche Stahl, verzinkten Stahl, Aluminium, eine Aluminiumlegierung, Magnesium und/oder eine Zink-Magnesium-Legierung enthalten, ein verbessertes Verfahren zur korrosionsschützenden Vorbehandlung bereitzustellen, mit dem insbesondere der Korrosionsschutz auf verzinkten Stählen erhöht wird.

Gelöst wird die Aufgabe durch ein Verfahren nach Anspruch 1, ein Verfahren nach Anspruch 2, eine wässrige Zusammensetzung nach Anspruch 16, ein Konzentrat nach Anspruch 17, eine metallische Oberfläche nach Anspruch 18 sowie die Verwendung eines metallischen Substrats nach Anspruch 19.

Bei den erfindungsgemäßen Verfahren zur korrosionsschützenden Vorbehandlung einer metallischen Oberfläche, welche Stahl, verzinkten Stahl, Aluminium, eine Aluminiumlegierung, Magnesium und/oder eine Zink-Magnesium-Legierung enthält, wird die metallische Oberfläche
i) mit einer sauren wässrigen Zusammensetzung A, die a1) mindestens eine Verbindung ausgewählt aus der Gruppe bestehend aus Titan-, Zirkonium- und Hafnium-Verbindungen umfasst, und
ii) mit einer wässrigen Zusammensetzung B, die b1) mindestens ein (Meth)acrylatharz und b2) mindestens ein Phenolharz umfasst, in Kontakt gebracht, wobei die metallische Oberfläche zuerst mit der Zusammensetzung A und dann mit der Zusammensetzung B,
   a) zuerst mit der Zusammensetzung B und dann mit der Zusammensetzung A und/oder
   b) gleichzeitig mit der Zusammensetzung A und der Zusammensetzung B in Kontakt gebracht wird und wobei das mindestens eine (Meth)acrylatharz b1) ein Copolymer eines Methacrylsäureesters und von Acrylsäure ist.

### Definitionen:

Im Sinne der vorliegenden Erfindung ist unter "wässriger Zusammensetzung" auch eine solche zu verstehen, die neben Wasser als Lösungs-/Dispergiermittel noch weniger als 50 Gew.-% - bezogen auf die Gesamtmenge der Lösungs-/ Dispergiermittel - andere, organische Lösungs-/Dispergiermittel enthält.

Im Sinne der vorliegenden Erfindung ist unter "berechnet als Hexafluorozirkoniumsäure" die Fiktion zu verstehen, es handele sich bei sämtlichen Molekülen der Komponente a1) in der Zusammensetzung A um Hexafluorozirkoniumsäure-Moleküle, also H₂ZrF₆.

Mit "Komplexfluoriden" sind neben den deprotonierten Formen auch die jeweiligen ein- oder mehrfach protonierten Formen gemeint.

Im Sinne der vorliegenden Erfindung ist mit "(Meth)acrylatharz" in der Komponente b1) ein Copolymer gemeint, welches als Monomereinheiten einen Methacrylsäureester und Acrylsäure enthält.

Die metallische Oberfläche könnte nacheinander mit einer ersten Zusammensetzung B (Vorspüle), mit einer Zusammensetzung A und mit einer zweiten Zusammensetzung B (Nachspüle) in Kontakt gebracht werden, wobei die erste und die zweite Zusammensetzung B auch chemisch identisch sein können.

Die metallische Oberfläche wird vor, nach und/oder zwischen dem Inkontaktbringen mit der Zusammensetzung A und der Zusammensetzung B mit einer oder mehreren weiteren Zusammensetzungen - insbesondere Spülzusammensetzungen - in Kontakt gebracht und/oder ganz oder teilweise getrocknet.

Dass "die metallische Oberfläche [...] gleichzeitig mit der Zusammensetzung A und der Zusammensetzung B in Kontakt gebracht wird", ist so zu verstehen, dass sie auch mit einer einzigen Zusammensetzung in Kontakt gebracht werden kann, bei der es sich um eine wässrige Zusammensetzung handelt, welche alle Komponenten a1), b1) und b2) sowie die gegebenenfalls weiteren Komponenten der Zusammensetzungen A und B (siehe unten) enthält.

### Zusammensetung B

Gemäß einer bevorzugten Ausführungsform wird die metallische Oberfläche zuerst mit der Zusammensetzung A und dann mit der Zusammensetzung B in Kontakt gebracht, die Zusammensetzung B also als Nachspüle eingesetzt.

Durch die erfindungsgemäße Zugabe des mindestens einen (Meth)acrylatharzes b1) und des mindestens einen Phenolharzes b2) zur Zusammensetzung B lassen sich die Eigenschaften der gebildeten Beschichtungen, insbesondere der Korrosionsschutz auf verzinktem Stahl deutlich verbessern.

Dabei enthält das (Meth)acrylatharz b1) in der Zusammensetzung B neben einem Methacrylsäureester noch Monomereinheiten von Acrylsäure.

Unter "(Meth)acrylsäure" sind Acrylsäure und/oder Methacrylsäure sowie die jeweiligen deprotonierten Formen zu verstehen.

Das (Meth)acrylatharz b1) ist ein Copolymer eines Methacrylsäureesters und von Acrylsäure, ganz besonders bevorzugt von Methylmethacrylat und Acrylsäure, wobei letzteres vorzugsweise 80 bis 98 Gew.-% Methylmethacrylat und 2 bis 20 Gew.-% Acrylsäure (Summe: 100 Gew.-%), weiter bevorzugt 85 bis 95 Gew.-% Methylmethacrylat und 5 bis 15 Gew.-% Acrylsäure (Summe: 100 Gew.-%) enthält.

Bei dem mindestens einen (Meth)acrylatharz b1) handelt es sich bevorzugt um ein statistisches Copolymer.

Das mindestens eine (Meth)acrylatharz b1) weist zudem vorzugsweise zusätzlich Hydroxy-, Silyl-, Alkyl-, Aryl-, Heteroalkyl-, Heteroaryl-, Thio-, Amino-, Amid-, Nitril-, Epoxy-, Mercapto-, Ureido-, Nitro-, Halogeno- und/oder Cyanogruppen, weiter bevorzugt zusätzlich Hydroxy-, Silyl-, Alkyl-, Amino- und/oder Epoxygruppen auf. Besonders bevorzugt weist das mindestens eine (Meth)acrylatharz b1) zusätzlich Hydroxy- und/oder Silylgruppen auf. Die zusätzlichen Gruppen befinden vorzugsweise an den Alkoholresten der (Meth)acrylat-Monomereinheiten und haben den Vorteil, kovalente Bindungen zu der metallischen Oberfläche und/oder zu den Komponenten weiterer Beschichtungen, insbesondere von Lacken, ausbilden zu können.

Das mindestens eine (Meth)acrylatharz b1) weist bevorzugt ein massenmittleres Molekulargewicht im Bereich von 1.000 bis 500.000 g/mol, weiter bevorzugt von 3.000 bis 250.000 g/mol, besonders bevorzugt im Bereich von 5.000 bis 20.000, weiter bevorzugt von 8.000 bis 17.000 g/mol und ganz besonders bevorzugt von 10.000 bis 15.000 g/mol auf.

Vorzugsweise wurde das mindestens eine Phenolharz b2) in der Zusammensetzung B durch saure Kondensation von Formaldehyd und Phenol hergestellt und weist ein molares Verhältnis von Formaldehyd zu Phenol von kleiner als 1 : 1 auf (Novolak) und/oder wurde durch basische Kondensation von Formaldehyd und Phenol hergestellt und enthält reaktive Methylolgruppen, wobei seine Benzolringe über Methylengruppen sowie über Etherbrücken miteinander verbunden sind (Resol).

Besonders bevorzugt handelt es sich bei dem mindestens einen Phenolharz b2) um ein Resol.

Das mindestens eine Phenolharz b2) weist bevorzugt ein massenmittleres Molekulargewicht im Bereich von 100 bis 5.000 g/mol, weiter bevorzugt von 130 bis 3.000 g/mol, weiter bevorzugt von 145 bis 1.000 g/mol, besonders bevorzugt im Bereich von 160 bis 600 g/mol und ganz besonders bevorzugt von 190 bis 300 g/mol auf.

Gemäß einer besonders bevorzugten Ausführungsform umfasst die Zusammensetzung B als b1) ein Copolymer von Methylmethacrylat und Acrylsäure mit 85 bis 95 Gew.-% Methylmethacrylat und 5 bis 15 Gew.-% Acrylsäure (Summe: 100 Gew.-%) und einem massenmittleren Molekulargewicht im Bereich von 8.000 bis 17.000 g/mol sowie als b2) ein Resol mit einem massenmittleren Molekulargewicht im Bereich von 145 bis 1.000 g/mol.

Die Zusammensetzung B umfasst die Komponenten b1) und b2) vorzugsweise in einem Gewichtverhältnis von 1 : 1 bis 10 : 1, weiter bevorzugt von 2 : 1 bis 6 : 1 und besonders bevorzugt in einem Gewichtverhältnis von 3,1 : 1 bis 4,6 : 1.

Bevorzugt liegt in der Zusammensetzung B die Konzentration von b1) und b2) insgesamt im Bereich von 20 bis 400 mg/l und besonders bevorzugt im Bereich von 50 bis 200 mg/l (berechnet als Feststoffzusatz).

Der pH-Wert der Zusammensetzung B liegt bevorzugt im Bereich von 3 bis 9, besonders bevorzugt von 3 bis 6 und ganz besonders bevorzugt im Bereich von 4 bis 5. Ein pH-Wert von 4 bis 5 ist insbesondere in den Fällen vorteilhaft, dass es sich bei der Zusammensetzung B um ein Konversionsbad handelt.

Bestimmte in der Zusammensetzung B enthaltene ionischen Spezies können - wie sich überraschenderweise gezeigt hat - das mindestens eine (Meth)acrylatharz b1) und das mindestens ein Phenolharz b2) in der Zusammensetzung B unter gewissen Umständen destabilisieren und zu einer Aggregation und Ausfällung dieser Komponenten führen.

Die Zusammensetzung B kann vorteilhafterweise einen Stabilisator b3) enthalten. Überaschenderweise setzt dieser die Empfindlichkeit der Zusammensetzung B gegenüber den bestimmten ionische Spezies herab und ermöglicht es zudem über einen breiteren pH-Bereich der Zusammensetzung B zu arbeiten.

Vor allem wenn die metallische Oberfläche mit einer einzigen wässrigen Zusammensetzung in Kontakt gebracht wird, welche alle Komponenten a1), b1) und b2) enthält, d.h. also wenn das erfindungsgemäße Harzgemisch b1) + b2) dem Konversionsbad zugeben wird, ist ein solcher Stabilisator von Vorteil. Im sauren Milieu des Konversionsbades - pH-Wert von bspw. 4,8 - neigt das Harzgemisch ansonsten zur Aggregation, was mit der Zeit zur Unbrauchbarkeit des Bades führt.

Bei besagtem Stabilisator b3) handelt es sich um mindestens ein Triblockcopolymer der Formel I:

PEOx-PPOy-PEOz (I),

wobei PEO für Polyethylenoxid und PPO für Polypropylenoxid steht, x und z jeweils eine ganze Zahl im Bereich von 4 bis 12 sind und y eine ganze Zahl im Bereich von 35 bis 65 ist.

Vorzugsweise sind x und z jeweils eine ganze Zahl im Bereich von 6 bis 10 und ist y eine ganze Zahl im Bereich von 40 bis 60. Weiter bevorzugt sind x und z jeweils eine ganze Zahl im Bereich von 7 bis 9 und ist. y eine ganze Zahl im Bereich von 45 bis 55.

Gemäß einer besonders bevorzugten Ausführungsform wird Pluronic^{®} PE 9200 (BASF, Deutschland) als Stabilisator b3) eingesetzt. Dabei handelt es sich um PEO₈-PPO₅₀-PEOs.

Die Massenkonzentration (berechnet als Feststoffzusatz) des Stabilisators b3) in der Zusammensetzung B beträgt vorzugsweise das 1,5- bis 2,5-fache, weiter bevorzugt das 1,8- bis 2,2-fache der Gesamtkonzentration des (Meth)acrylatharzes b1) und des Phenolharzes b2).

Gemäß einer bevorzugten Ausführungsform enthält die Zusammensetzung B zusätzlich noch mindestens eine Verbindung b4) der Formel II

R¹O-(CH₂)ₓ-Z-(CH₂)_{y}-OR² (II),

wobei R¹ und R² jeweils unabhängig voneinander H oder eine HO-(CH₂)_{w}-Gruppe mit w ≥ 2 sind, x und y jeweils unabhängig voneinander 1 bis 4 sind, und Z ein S-Atom oder eine C-C-Dreifachbindung ist.

Die mindestens eine Verbindung b4) der Formel II wirkt dabei als physikalischer Korrosionsinhibitor, der durch Dipol-Dipol Wechselwirkungen und Van-der-Waals-Kräfte an der metallischen Oberfläche adsorbiert wird, und dadurch einen korrosiven Angriff auf der Metalloberfläche verhindert.

Die mindestens eine Verbindung b4) liegt bevorzugt in einer Konzentration im Bereich von 10 bis 300 mg/l, besonders bevorzugt von 50 bis 180 mg/l (berechnet als But-2-in-1,4-diol) vor.

Die Zugabe eines solchen Korrosionsinhibitors hat sich insbesondere für den Fall als vorteilhaft erwiesen, dass die Zusammensetzung B als Vorspüle eingesetzt wird.

Gemäß einer besonders bevorzugten Ausführungsform umfasst die Zusammensetzung B neben den Komponenten b1) und b2) noch die Komponenten b3) und b4). Vorzugsweise umfasst die Zusammensetzung B als zusätzliche Komponente b5) noch mindestens eine Molybdän-Verbindung, bevorzugt Heptamolybdat, welches die Stabilität der Zusammensetzung B in keiner Weise negativ beeinflusst. Dabei liegt die Konzentration der mindestens einen Molybdän-Verbindung vorzugsweise im Bereich von 10 bis 100 mg/l (berechnet als Molybdän).

Die Zugabe einer solchen Molybdän-Verbindung hat sich insbesondere für den Fall als vorteilhaft erwiesen, dass die Zusammensetzung B als Nachspüle eingesetzt wird.

Gemäß einer ersten besonders bevorzugten Ausführungsform enthält die Zusammensetzung B neben den Komponenten b1) und b2) noch die Komponenten b3) und b5).

Gemäß einer zweiten besonders bevorzugten Ausführungsform enthält die Zusammensetzung B neben den Komponenten b1) und b2) noch die Komponenten b4) und b5).

Gemäß einer ganz besonders bevorzugten Ausführungsform enthält die Zusammensetzung B neben den Komponenten b1) und b2) noch die Komponenten b3), b4) und b5).

### Zusammensetzung A

Vorzugsweise enthält die Zusammensetzung A als Komponente a1) mindestens ein Komplexfluorid ausgewählt aus der Gruppe bestehend aus den Komplexfluoriden von Titan, Zirkonium und Hafnium.

Weiter bevorzugt ist hier Zirkoniumkomplexfluorid. Dabei kann Zirkonium auch als Zirkonylnitrat, Zirkoniumcarbonat, Zirkonylacetat oder Zirkoniumnitrat, bevorzugt als Zirkonylnitrat zugeben werden. Dies gilt entsprechend für Titan und Hafnium.

Dabei liegt der Gehalt des mindestens einen Komplexfluorids vorzugsweise im Bereich von 0,05 bis 4 g/l, bevorzugt 0,1 bis 1,5 g/l und besonders bevorzugt bei ca. 0,25 g/l (berechnet als Hexafluorozirkoniumsäure).

In einer bevorzugten Ausführungsform enthält die Zusammensetzung A als Komponente a1) mindestens zwei verschiedene Komplexfluoride, insbesondere Komplexfluoride von zwei verschiedenen Metallkationen und besonders bevorzugt Komplexfluoride von Titan und von Zirkonium.

In der Zusammensetzung A liegt die Konzentration von a1) vorzugsweise im Bereich von 0,05 bis 4 g/l, weiter bevorzugt 0,1 bis 1,5 g/l, weiter bevorzugt 0,15 bis 0,57 g/l, besonders bevorzugt 0,20 bis 0,40 g/l und ganz besonders bevorzugt bei ca. 0,25 g/l (berechnet als Hexafluorozirkoniumsäure).

Die Gehalte der Komponenten a1) und gegebenfalls der Komponenten a2) und a3) (siehe unten) lassen sich während der Behandlung der metallischen Oberflächen mittels ICP-OES (optische Emissionsspektrometrie mit induktiv gekoppeltem Plasma) oder näherungsweise photometrisch überwachen, sodass gegebenenfalls eine Nachdosierung einzelner oder mehrerer Komponenten vorgenommen werden kann.

Vorzugsweise umfasst die Zusammensetzung A zusätzlich noch a2) mindestens eine Verbindung ausgewählt aus der Gruppe bestehend aus Organoalkoxysilanen, Organosilanolen, Polyorganosilanolen, Organosiloxanen und Polyorganosiloxanen. Hinsichtlich der mindestens einen Verbindung der Komponente a2) in der Zusammensetzung A ist mit "Organo-" mindestens eine organische Gruppe gemeint, die direkt über ein Kohlenstoffatom mit einem Siliziumatom verbunden ist und infolgedessen nicht hydrolytisch von diesem abgespalten wird.

Unter "Polyorganosiloxanen" werden im Sinne dieser Erfindung solche Verbindungen verstanden, die aus mindestens zwei Organosilanolen kondensiert werden können, und kein Polydimethylsiloxan bilden.

Vorzugsweise enthält die Zusammensetzung A als Komponente a2) mindestens ein Organoalkoxysilan, Organosilanol, Polyorganosilanol, Organosiloxan und/oder Polyorganosiloxan mit jeweils mindestens einer Amino-Gruppe, Harnstoff-Gruppe, Imido-Gruppe, Imino-Gruppe und/oder Ureido-Gruppe pro Organoalkoxysilan/ Organosilanoleinheit. Weiter bevorzugt ist die Komponente a2) mindestens ein Organoalkoxysilan, Organosilanol, Polyorganosilanol, Organosiloxan und/oder Polyorganosiloxan mit jeweils mindestens einer, insbesondere mit ein bis zwei Aminogruppen pro Organoalkoxysilan/Organosilanoleinheit.

Besonders bevorzugt ist 2-Aminoethyl-3-amino-propyltrimethoxysilan, 2-Aminoethyl-3-amino-propyltriethoxysilan, Bis(trimethoxysilylpropyl)amin oder Bis(triethoxy-silylpropyl)amin oder eine Kombination aus diesen als Organoalkoxysilan/ Organosilanoleinheit. Ganz besonders bevorzugt ist 2-Aminoethyl-3-amino-propyltrimethoxysilan oder Bis(trimethoxysilylpropyl)amin oder eine Kombination aus beiden als Organoalkoxysilan/Organosilanoleinheit.

In der Zusammensetzung A liegt die Konzentration von a2) vorzugsweise im Bereich von 1 bis 200 mg/l, weiter bevorzugt 5 bis 100 mg/l, besonders bevorzugt 20 bis 50 mg/l und ganz besonders bevorzugt 25 bis 45 mg/l (berechnet als Silizium).

Vorteilhafterweise umfasst die Zusammensetzung A zusätzlich eine Komponente a3), bei der es sich um mindestens eine Art von Kation ausgewählt aus der Gruppe bestehend aus Kationen von Metallen der 1. bis 3. und 5. bis 8. Nebengruppe einschließlich Lanthaniden sowie der 2. Hauptgruppe des Periodensystems der Elemente sowie von Lithium, von Bismut und von Zinn und/oder um mindestens eine entsprechende Verbindung handelt.

Die Komponente a3) ist dabei vorzugsweise mindestens eine Art von Kation ausgewählt aus der Gruppe bestehend aus den Kationen von Cer und weiteren Lanthaniden, Chrom, Eisen, Kalzium, Kobalt, Kupfer, Magnesium, Mangan, Molybdän, Nickel, Niob, Tantal, Yttrium, Vanadium, Lithium, Bismut, Zink und Zinn und/oder mindestens eine entsprechende Verbindung.

Weiter bevorzugt umfasst die Zusammensetzung A als Komponente a3) Zinkkationen, Kupferkationen und/oder Cerkationen und/oder mindestens eine Molybdän-Verbindung.

Besonders bevorzugt umfasst die Zusammensetzung A als Komponente a3) Zinkkationen, ganz besonders bevorzugt Zinkkationen und Kupferkationen.

Die Konzentrationen in der Zusammensetzung A sind dabei vorzugsweise die folgenden:
- Zinkkationen: 0,1 bis 5 g/l
- Kupferkationen: 5 bis 50 g/l
- Cerkationen: 5 bis 50 mg/l
- Molybdänverbindung: 10 bis 100 mg/l (berechnet als Molybdän).

Gemäß einer besonders bevorzugten Ausführungsform umfasst die Zusammensetzung A neben der Komponente a1) noch die Komponenten a2) und a3).

Gegebenenfalls umfasst die Zusammensetzung A - je nach spezifischen Anforderungen bzw. Gegebenheiten - zusätzlich noch eine Komponente a4). Diese ist mindestens eine Verbindung ausgewählt aus der Gruppe bestehend aus pH-Wert beeinflussenden Substanzen, organischen Lösemitteln, wasserlöslichen FluorVerbindungen und Kolloiden.

Die Zusammensetzung A weist dabei für die Komponente a4) vorzugsweise einen Gehalt im Bereich von 0,1 bis 20 g/l auf.

Die pH-Wert beeinflussende Substanzen sind vorzugsweise ausgewählt aus der Gruppe bestehend aus Salpetersäure, Schwefelsäure, Essigsäure, Methansulfonsäure, Flusssäure, Ammonium/Ammoniak, Natriumcarbonat und Natronlauge. Weiter bevorzugt wird der pH-Wert mit Salpetersäure, Ammonium und/oder Natriumcarbonat eingestellt.

Die Zusammensetzung A weist vorzugsweise einen pH-Wert im Bereich von 0,5 bis 5,5, weiter bevorzugt von 2 bis 5,5, besonders bevorzugt von 3,5 bis 5,3 und ganz besonders bevorzugt von 4,0 bis 5,0 auf.

Die organischen Lösemittel sind vorzugsweise ausgewählt aus der Gruppe bestehend aus Methanol und Ethanol. So sind in der Praxis Methanol und/oder Ethanol als Reaktionsprodukte der Organoalkoxysilan-Hydrolyse in den Behandlungsbädern vorhanden.

Die wasserlöslichen Fluorverbindungen sind vorzugsweise ausgewählt aus der Gruppe bestehend aus fluoridhaltigen Verbindung und Fluorid-Anionen.

Der Gehalt an freiem Fluorid in der Zusammensetzung A liegt vorzugsweise im Bereich von 0,015 bis 0,15 g/l, weiter bevorzugt 0,025 bis 0,1 g/l und besonders bevorzugt im Bereich von 0,03 bis 0,05 g/l.

Die Kolloide sind vorzugsweise Metalloxidpartikel, weiter bevorzugt Metalloxidpartikel ausgewählt aus der Gruppe bestehend aus ZnO, SiO₂, CeO₂, ZrO₂ und TiO₂.

Bevorzugt enthält die Zusammensetzung A noch mindestens eine Art Kationen ausgewählt aus der Gruppe bestehend aus Alkalimetallionen, Ammoniumionen und entsprechenden Verbindungen. Besonders bevorzugt enthält sie Natriumionen und/oder Ammoniumionen.

Die Zusammensetzung A kann außerdem phosphor- und sauerstoffhaltige Verbindungen wie Phosphate und/oder Phosphonate enthalten. Zudem kann sie Nitrat aufweisen.

Der Gehalt an schwefelhaltigen Verbindungen, insbesondere Sulfat, sollte jedoch vorzugsweise so gering wie möglich gehalten werden. Der Gehalt an schwefelhaltigen Verbindungen liegt besonders bevorzugt unter 100 mg/l (berechnet als Schwefel).

Die zu behandelnde metallische Oberfläche, welche gegebenenfalls zuvor gereinigt und/oder gebeizt wurde, kann mit der Zusammensetzung A und/oder mit der Zusammensetzung B jeweils bespritzt, in diese getaucht oder mit dieser geflutet werden. Es ist auch möglich, die jeweilige Zusammensetzung manuell durch Wischen oder Pinseln oder mit Rollen oder Walzen (Coilcoating-Verfahren) auf die zu behandelnde metallische Oberfläche aufzutragen. Möglich ist zudem eine elektrolytische Abscheidung der jeweiligen Zusammensetzung auf der zu behandelnden metallischen Oberfläche.

Die Behandlungsdauer liegt bei der Teile-Behandlung vorzugsweise im Bereich von 15 Sekunden bis 20 Minuten, weiter bevorzugt 30 Sekunden bis 10 Minuten und besonders bevorzugt im Bereich von 45 Sekunden bis 5 Minuten. Die Behandlungstemperatur liegt vorzugsweise im Bereich von 5 bis 50, weiter bevorzugt 15 bis 40 und besonders bevorzugt im Bereich von 25 bis 30 °C.

Das erfindungsgemäße Verfahren ist auch für die Beschichtung von Bändern (Coils) geeignet. Die Behandlungsdauer liegt hier vorzugsweise im Bereich von wenigen Sekunden bis einigen Minuten, etwa im Bereich 1 bis 1.000 Sekunden.

Mit dem erfindungsgemäßen Verfahren lässt sich im gleichen Bad ein Mix aus verschiedenen metallischen Werkstoffen beschichten (sog. Multimetallfähigkeit).

Vorzugsweise enthält die zu behandelnde metallische Oberfläche Stahl, verzinkten Stahl, Magnesium und/oder eine Zink-Magnesium-Legierung, weiter bevorzugt enthält sie Stahl und/oder verzinkten Stahl, besonders bevorzugt enthält sie verzinkten Stahl. Vor allem bei metallischen Oberflächen, welche verzinkten Stahl enthalten, konnte nach Beschichtung mit dem erfindungsgemäßen Verfahren ein stark verbesserter Korrosionsschutz nach kathodischer Elektrotauchlackierung (KTL) festgestellt werden.

Dies zeigt sich beispielsweise im Vergleich zur Behandlung mit einem Verfahren, welches sich von dem erfindungsgemäßen Verfahren nur darin unterscheidet, dass ein Polyacrylat und nicht eine Kombination aus mindestens einem (Meth)acrylatharz b1) und mindestens ein Phenolharz b2) in der Zusammensetzung B eingesetzt wird.

Die vorliegende Erfindung bezieht sich auch auf eine wässrige Zusammensetzung B zur Verbesserung der korrosionsschützenden Vorbehandlung einer metallischen Oberfläche, welche Stahl, verzinkten Stahl, Aluminium, eine Aluminiumlegierung, Magnesium und/oder eine Zink-Magnesium-Legierung enthält, so wie vorstehend beschrieben.

Zudem betrifft die Erfindung ein Konzentrat, aus dem durch Verdünnen mit Wasser eine erfindungsgemäße Zusammensetzung B hergestellt werden kann.

Das Behandlungsbad mit der erfindungsgemäßen Zusammensetzung B kann durch Verdünnen des Konzentrats mit Wasser und/oder einer wässrigen Lösung vorzugsweise um den Faktor 1 : 50.000 bis 1 : 10, weiter bevorzugt 1 : 10.000 bis 1 : 10, besonders bevorzugt 1 : 8.000 bis 1 : 10 und ganz besonders bevorzugt um den Faktor ca. 1 : 5.000 erhalten werden.

Außerdem betrifft die vorliegende Erfindung eine metallische Oberfläche, welche Stahl, verzinkten Stahl, Magnesium und/oder eine Zink-Magnesium-Legierung enthält, und mit dem erfindungsgemäßen Verfahren nach Anspruch 2 beschichtet wurde und die ausgebildete

Beschichtung ein mittels RFA (Röntgenfluoreszenzanalyse) bestimmtes Schichtgewicht aufweist von:
i) 5 bis 500 mg/m², bevorzugt 10 bis 200 und besonders bevorzugt 30 bis 120 mg/m² bezogen nur auf Komponente a1) (berechnet als Zirkonium).

Die ausgebildete Beschichtung könnte, gegebenenfalls, ein bestimmtes Schichtgewicht von 0,5 bis 50 mg/m², bevorzugt 1 bis 30 mg/m² und besonders bevorzugt 2 bis 10 mg/m² bezogen nur auf Komponente a2) (berechnet als Silizium) aufweisen.

Die mit dem erfindungsgemäßen Verfahren hergestellten Beschichtungen dienen als Korrosionsschutz sowie Haftvermittler für weitere Beschichtungen.

So lassen sie sich leicht mit mindestens einem Primer, Lack, Klebstoff und/oder einer lackähnlichen organischen Zusammensetzung weiter beschichten. Dabei kann vorzugsweise mindestens eine dieser weiteren Beschichtungen durch Erwärmen und/oder Bestrahlen gehärtet werden.

Die mit dem erfindungsgemäßen Verfahren hergestellten Beschichtungen werden vor einer weiteren Behandlung vorzugsweise gespült, um überschüssiges Polymer sowie störende Ionen von der metallischen Oberfläche zu entfernen. Die erste weitere Beschichtung kann im Nass-in-nass-Verfahren aufgebracht werden.

Als Lack wird dabei vorzugsweise ein kathodischer Elektrotauchlack (KTL) auf Basis von Epoxiden und/oder (Meth)acrylaten aufgebracht.

Schließlich betrifft die vorliegende Erfindung schließlich noch die Verwendung eines mit dem erfindungsgemäßen Verfahren beschichteten metallischen Substrats in der Automobilindustrie, für Schienenfahrzeuge, in der Luft- und Raumfahrtindustrie, im Apparatebau, im Maschinenbau, in der Bauindustrie, in der Möbelindustrie, für die Herstellung von Leitplanken, Lampen, Profilen, Verkleidungen oder Kleinteilen, für die Herstellung von Karosserien oder Karosserieteilen, von Einzelkomponenten, vormontierten bzw. verbundenen Elementen vorzugsweise in der Automobil- oder Luftfahrtindustrie, für die Herstellung von Geräten oder Anlagen, insbesondere von Haushaltsgeräten, Kontrolleinrichtungen, Prüfeinrichtungen oder Konstruktionselementen.

Bevorzugt ist die Verwendung der beschichteten metallischen Substrate für die Herstellung von Karosserien oder Karosserieteilen, von Einzelkomponenten sowie von vormontierten bzw. verbundenen Elementen in der Automobilindustrie.

Die vorliegende Erfindung soll durch die folgenden - nicht einschränkend zu verstehenden - Ausführungsbeispiele verdeutlicht werden.

### Ausführungsbeispiele

### i) Substrate und Vorbehandlung:

### Substrate:

Als Substrate wurden Bleche (10,5 x 19 cm) aus feuerverzinktem Stahl (HDG) sowie solche aus kaltgewalztem Stahl (CRS) eingesetzt.

### Reinigung:

Als mildalkalischer Tauchreiniger wurde in allen Beispielen Gardoclean^{®} S 5176 (Fa. Chemetall; enthält Phosphat, Borat und Tensid) verwendet. Dazu wurden 15 g/l in einem 50 I-Bad angesetzt, auf 60 °C erhitzt und die Substrate im Spritzen für 3 min. bei einem pH-Wert zwischen 10,0 und 11,0 gereinigt. Anschließend wurden die Substrate mit Stadtwasser und VE-Wasser gespült.

### (Erfindungsgemäße) Vorspüle:

Für die Vorspüle wurde VE-Wasser verwendet, dem gegebenenfalls erfindungsgemäß noch verschiedene Mengen eines Harzgemisches (vgl. **Tab. 1:** "Harzgem.") zugesetzt wurden. Dieses Harzgemisch enthielt das folgende Resol (beispielhafte Formel) mit einem massenmittleren Molekulargewicht von 160 g/mol 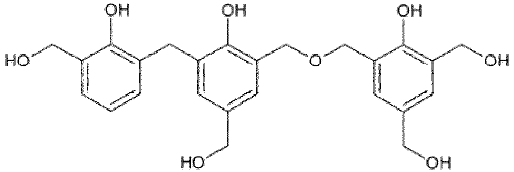 und ein (Meth)acrylatharz mit einem massenmittleren Molekulargewicht von 9630 g/mol (ermittelt mittels GPC), welches aus 90 mol-% Methylmethacrylat und 10 mol-% Acrylsäure polymerisiert worden war, in einem Gewichtsverhältnis von 1 : 3,7.

Der erfindungsgemäßen Vorspüle wurde gegebenenfalls noch ein Gemisch von Korrosionsinhibitoren (vgl. **Tab. 1:** "Korr.inh.) zugesetzt, so dass die Vorspüle 62,5 mg/l an But-2-in-1,4-diol und 50 mg/l an 1,4-Bis(2-hydroxyethoxy)-2-butin, also insgesamt 112,5 mg/l an Korrosionsinhibitoren enthielt.

**Tabelle 1**

| Vorspüle | Harzgem. (mg/l)* | Korr.inh. (mg/l) |
|---|---|---|
| A | 0 | 0 |
| B | 50 | 0 |
| C | 200 | 0 |
| D | 50 | 112,5 |

| | | |
|---|---|---|
| * Feststoffgehalt | | |

Die Vorspüle der Substrate wurde für 120 Sek. bei 20 °C unter mäßigem Rühren durchgeführt.

### (Erfindunqsqemäßes) Konversionsbad:

Für das Konversionsbad wurde das Oxsilan^{®}-Additiv 9936 (Chemetall, Deutschland; enthält Fluorid und eine Zirkoniumverbindung) sowie gegebenenfalls Oxsilan^{®} 9810/3 (Chemetall, Deutschland; enthält Aminosilane; vgl. Tab. 3: "Silan") in einer solchen Menge einem 50 I-Ansatz zugegeben, dass eine Zirkoniumkonzentration von 100-130 mg/l und eine Silankonzentration von 20-30 mg/l (berechnet als Si) resultierte. Die Badtemperatur wurde auf 30 °C eingestellt. Der pH-Wert und der freie Fluoridgehalt wurden durch Zugabe von verd. Natriumhydrogencarbonatlösung und verd. Flusssäure (5%-ig) auf pH = 4,8 bzw. 30-40 mg/l eingestellt.

Dabei wurde der pH-Wert kontinuierlich durch Zugabe von verd. Salpetersäure korrigiert.

Dem Bad wurden gegebenenfalls erfindungsgemäß noch verschiedene Mengen des bereits bei der erfindungsgemäßen Vorspüle beschriebenen Harzgemisches (vgl. **Tab. 3:** "Harzgem.") zugesetzt.

Weiterhin wurden in das erfindungsgemäße Konversionsbad verschiedene Mengen des speziellen Triblockcopolymers PEO₈-PPO₅₀-PEO₈ (Pluronic^{®} PE 9200; Fa. BASF, Deutschland; vgl. **Tab. 3:** "Stabil.") gegeben.

Das (erfindungsgemäße) Bad enthielt zudem stets 400 mg/l an Zink. Gegebenenfalls wurden dem (erfindungsgemäßen) Bad auch noch 8-10 mg/l an Kupfer in Form von Kupfernitrat zugegeben.

Vor dem Durchsatz von Substraten wurde das fertige Bad mindestens 12 h altern gelassen, um eine Einstellung eines chemischen Gleichgewichts innerhalb des Bades sicherstellen zu können. Die Konversionsbehandlung wurde für 120 Sek. unter mäßigem Rühren durchgeführt. Anschließend wurde mit Stadtwasser und VE-Wasser gespült.

### Erfindungsgemäße Nachspüle:

Für die Nachspüle wurde VE-Wasser verwendet, dem gegebenenfalls erfindungsgemäß noch verschiedene Mengen des bereits bei der erfindungsgemäßen Vorspüle beschriebenen Harzgemisches (vgl. **Tab. 2:** "Harzgem.") sowie gegebenenfalls noch 100 mg/l des speziellen bereits beim erfindungsgemäßen Konversionsbad beschriebenen Triblockcopolymers (vgl. **Tab. 2:** "Stabil.") zugesetzt wurden.

Gegebenenfalls wurden in die Nachspüle noch 20 mg/l oder 50 mg/l Molybdän in Form von Ammoniumheptamolybdat gegeben.

**Tabelle 2**

| Nachspüle | Harzgem. (mg/l)* | Stabil. (mg/l)* | Mo (mg/l) |
|---|---|---|---|
| A | 0 | 0 | 0 |
| B | 50 | 0 | 0 |
| C | 200 | 0 | 0 |
| D | 400 | 0 | 0 |
| E | 50 | 100 | 0 |
| F | 50 | 100 | 20 |
| G | 50 | 100 | 50 |

| | | | |
|---|---|---|---|
| * Feststoffgehalt | | | |

Die Nachspüle der Substrate wurde für 90 Sek. bei 20 °C unter mäßigem Rühren durchgeführt.

Durch die Kombination der verschiedenen Vorspülen, Konversionsbäder und Nachspülen ergaben sich die in der nachfolgenden **Tab. 3** aufgeführten (Vergleichs-) Beispiele:

**Tabelle 3**

| (Vgl.-) Bsp. | Subs. | Vorsp. | Konversionsbad | | | | | Nachsp. |
|---|---|---|---|---|---|---|---|---|
| | | | Zr (mg/l) | Si (mg/I)* | Cu (mg/l) | Harzgem. (mg/l)** | Stabil. (mg/l)** | |
| VB1 | HDG | A | 120 | 30 | 8 | 0 | 0 | A |
| B2 | HDG | A | 120 | 30 | 8 | 15 | 0 | A |
| B3 | HDG | A | 130 | 30 | 10 | 20 | 40 | A |
| B4 | HDG | A | 130 | 30 | 10 | 50 | 100 | A |
| B5 | HDG | A | 130 | 30 | 10 | 70 | 140 | A |
| B6 | HDG | A | 130 | 30 | 10 | 50 | 100 | A |
| B7 | HDG | A | 130 | 30 | 10 | 100 | 200 | A |
| VB8 | CRS | A | 120 | 30 | 8 | 0 | 0 | A |
| B9 | CRS | A | 130 | 30 | 10 | 20 | 40 | A |
| B10 | CRS | A | 130 | 30 | 10 | 50 | 100 | A |
| B11 | HDG | A | 120 | 30 | 8 | 0 | 0 | B |
| B12 | HDG | A | 130 | 30 | 10 | 0 | 0 | B |
| B13 | HDG | A | 130 | 30 | 10 | 0 | 0 | D |
| B14 | HDG | A | 130 | 30 | 10 | 0 | 0 | B |
| B15 | HDG | A | 130 | 30 | 10 | 0 | 0 | C |
| B16 | HDG | A | 130 | 30 | 0 | 0 | 0 | C |
| B17 | CRS | A | 130 | 0 | 0 | 0 | 0 | C |
| B18 | CRS | A | 130 | 30 | 0 | 0 | 0 | C |
| B19 | CRS | C | 130 | 30 | 10 | 0 | 0 | A |
| B20 | HDG | B | 130 | 30 | 10 | 0 | 0 | A |
| B21 | HDG | C | 130 | 30 | 10 | 0 | 0 | A |
| B22 | HDG | D | 130 | 30 | 10 | 0 | 0 | A |
| B23 | HDG | A | 120 | 30 | 8 | 30 | 0 | A |
| B24 | CRS | A | 130 | 30 | 10 | 100 | 200 | A |
| B25 | HDG | A | 120 | 30 | 8 | 27,5 | 0 | A |
| B26 | CRS | A | 120 | 30 | 8 | 27,5 | 0 | A |
| VB27 | HDG | A | 100 | 30 | 8 | 0 | 0 | A |
| B28 | HDG | A | 100 | 30 | 8 | 0 | 0 | E |
| B29 | HDG | A | 100 | 30 | 8 | 0 | 0 | F |
| B30 | HDG | A | 100 | 30 | 8 | 0 | 0 | G |

| | | | | | | | | |
|---|---|---|---|---|---|---|---|---|
| * berechnet als Si; ** Feststoffgehalt | | | | | | | | |

### ii) Analytik, Lackierung, Haftfestigkeit und Korrosionsschutz:

### Röntgenfluorenzenzanalyse:

Die Schichtgewichte (SG) in mg/m² auf den vorbehandelten Substraten wurden mittels Röntgenfluorenzenzanalyse (RFA) ermittelt. Dabei wurde die Auflage von Zirkonium gemessen.

### Lackierung:

Die vorbehandelten Substrate wurden KTL-beschichtet. Hierzu wurde Cathoguard^{®} 800 (BASF, Deutschland) verwendet. Anschließend wurde noch ein Aufbaulack aufgebracht. Bei diesem handelte es sich um Daimler Black. Die Dicke der Lackschicht wurde mittels eines Schichtdickenmessgeräts nach DIN EN ISO 2808 (Version 2007) bestimmt. Sie lag im Bereich von 90 bis 110 µm.

### Korrosionstests:

Es wurden zudem vier verschiedene Korrosionstests durchgeführt:
1.) der Korrosionswechseltest nach Volkswagen-Spezifikation PV 1210 (Version 2010-02) über 60 Runden,
2.) der Korrosionswechseltest nach VDA-Prüfblatt 621-415 und nach DIN EN ISO 20567-1 (Version 1982; Verfahren C) über 10 Runden,
3.) der Korrosionswechseltest Meko S Test c nach DIN EN ISO 4628-8 (Version 2013-03) und
4.) die kathodische Polarisation nach FFM_C-AN_01941 (Version 2.0)

### Unterwanderung:

Die korrosive Unterwanderung in mm wurde jeweils nach DIN EN ISO 4628-8 (Version 2012) bestimmt (vgl. **Tab. 4:** "Unt."). Bei den angegeben Werten handelt es sich um Mittelwerte aus jeweils drei Blechen.

Die Ergebnisse der durchgeführten Korrosionstests sind in der nachfolgenden **Tab. 4** zusammengefasst:

**Tabelle 4**

| (Vgl.-) Bsp. | SG (Zr) (mg/m²) | VDA 621-415 Unt. (mm) | PV 1210 Unt. (mm) | Meko S Unt. (mm) | Kath. Pol. Unt. (mm) |
|---|---|---|---|---|---|
| VB1 | 94 | 2,3 | 3,0 | 5,8 | n.b. |
| B2 | 80 | 1,8 | 2,4 | n.b. | n.b. |
| B3 | 117 | 1 | n.b. | n.b. | n.b. |
| B4 | 119 | 0,8 | n.b. | n.b. | n.b. |
| B5 | 115 | 1 | n.b. | n.b. | n.b. |
| B6 | 62 | 0,8 | n.b. | n.b. | n.b. |
| B7 | 59 | 0,9 | n.b. | n.b. | n.b. |
| VB8 | 50 | 2,8 | 5,2 | 5,3 | n.b. |
| B9 | 51 | 1,6 | n.b. | n.b. | n.b. |
| B10 | 50 | 1,7 | n.b. | n.b. | n.b. |
| B11 | 90 | 1,8 | n.b. | 4,8 | n.b. |
| B12 | 125 | 1 | n.b. | n.b. | n.b. |
| B13 | 147 | 1,2 | n.b. | n.b. | n.b. |
| B14 | 69 | 0,8 | n.b. | n.b. | n.b. |
| B15 | 70 | 0,7 | n.b. | n.b. | n.b. |
| B16 | 46 | 0,8 | n.b. | n.b. | n.b. |
| B17 | 81 | 1,2 | n.b. | n.b. | n.b. |
| B18 | 53 | 1,0 | n.b. | n.b. | n.b. |
| B19 | 30 | 1 | n.b. | n.b. | n.b. |
| B20 | 66 | 1 | n.b. | n.b. | n.b. |
| B21 | 45 | 0,8 | n.b. | n.b. | n.b. |
| B22 | 60 | 0,8 | n.b. | n.b. | n.b. |
| B23 | 97 | n.b. | 2,4 | n.b. | n.b. |
| B24 | 27 | n.b. | 2,7 | n.b. | n.b. |
| B25 | 113 | n.b. | n.b. | 4,6 | n.b. |
| B26 | 48 | n.b. | n.b. | 4,9 | n.b. |
| VB27 | 86 | n.b. | n.b. | n.b. | 12,8 |
| B28 | 93 | n.b. | n.b. | n.b. | 11,5 |
| B29 | 74 | n.b. | n.b. | n.b. | 5,4 |
| B30 | 79 | n.b. | n.b. | n.b. | 3,9 |

| | | | | | |
|---|---|---|---|---|---|
| n.b. = nicht bestimmt | | | | | |

### iii) Ergebnisse und Diskussion:

**Tab. 4** zeigt, dass durch Zusatz des erfindungsgemäßen Harzgemisches sowohl in der Vorspüle, als auch im Konversionsbad sowie in der Nachspüle eine Verringerung der korrosiven Unterwanderung festzustellen ist (vgl. Werte der Beispiele vs. die der Vergleichsbeispiele VB1, VB8 und VB27).

Durch den Zusatz von Silan kommt es noch einmal zu einer Verbesserung (vgl. B18 vs. B17). Die Zugabe von Kupfer hat eine Erhöhung des Schichtgewichtes zufolge (vgl. B15 und B16).

Durch die Zugabe des speziellen Triblockcopolymers konnte die Standzeit des das erfindungsgemäße Harzgemisch enthaltenden Konversionsbades deutlich erhöht werden (Ergebnisse nicht gezeigt). Die Agglomaration des Harzes im sauren Milieu wurde weitestgehend unterbunden (B3 bis B7 vs. B2; B9 und B10).

Der Zusatz des Korrosionsinhibitors zur erfindungsgemäßen Vorspüle führte ebenfalls zu einer weiteren Verbesserung (vgl. B22 vs. B20), ebenso wie die Zugabe von Molybdän zur erfindungsgemäßen Nachspüle (vgl. B29, B30 vs. B29).

## Patentansprüche

1. Verfahren zur korrosionsschützenden Vorbehandlung einer metallischen Oberfläche, welche Stahl, verzinkten Stahl, Aluminium, eine Aluminiumlegierung, Magnesium und/oder eine Zink-Magnesium-Legierung enthält, **dadurch gekennzeichnet, dass** die metallische Oberfläche
i) mit einer sauren wässrigen Zusammensetzung A, die a1) mindestens eine Verbindung ausgewählt aus der Gruppe bestehend aus Titan-, Zirkonium- und Hafnium-Verbindungen umfasst, und
ii) mit einer wässrigen Zusammensetzung B, die b1) mindestens ein (Meth)acrylatharz und b2) mindestens ein Phenolharz umfasst,
in Kontakt gebracht wird, wobei die metallische Oberfläche zuerst mit der Zusammensetzung A und dann mit der Zusammensetzung B in Kontakt gebracht wird und wobei das mindestens eine (Meth)acrylatharz b1) ein Copolymer eines Methacrylsäureesters und von Acrylsäure ist.

2. Verfahren zur korrosionsschützenden Vorbehandlung einer metallischen Oberfläche, welche Stahl, verzinkten Stahl, Aluminium, eine Aluminiumlegierung, Magnesium und/oder eine Zink-Magnesium-Legierung enthält, **dadurch gekennzeichnet, dass** die metallische Oberfläche
i) mit einer sauren wässrigen Zusammensetzung A, die a1) mindestens eine Verbindung ausgewählt aus der Gruppe bestehend aus Titan-, Zirkonium- und Hafnium-Verbindungen umfasst, und
ii) mit einer wässrigen Zusammensetzung B, die b1) mindestens ein (Meth)acrylatharz und b2) mindestens ein Phenolharz umfasst,
in Kontakt gebracht wird, wobei die metallische Oberfläche
a) zuerst mit der Zusammensetzung B und dann mit der Zusammensetzung A in Kontakt gebracht wird und/oder
b) gleichzeitig mit der Zusammensetzung A und der Zusammensetzung B in Kontakt gebracht wird,
und wobei das mindestens eine (Meth)acrylatharz b1) ein Copolymer eines Methacrylsäureesters und von Acrylsäure ist.

3. Verfahren nach Anspruch 1 oder 2, **dadurch gekennzeichnet, dass** das mindestens eine (Meth)acrylatharz b1) ein Copolymer von Methylmethacrylat und Acrylsäure ist.

4. Verfahren nach Anspruch 3, **dadurch gekennzeichnet, dass** das mindestens eine (Meth)acrylatharz b1) 80 bis 98 Gew.-% Methylmethacrylat und 2 bis 20 Gew.-% Acrylsäure (Summe: 100 Gew.-%) enthält.

5. Verfahren nach einem der vorhergehenden Ansprüche, **dadurch gekennzeichnet, dass** das mindestens eine (Meth)acrylatharz b1) zusätzlich Hydroxy-, Silyl-, Alkyl-, Aryl-, Heteroalkyl-, Heteroaryl-, Thio-, Amino-, Amid-, Nitril-, Epoxy-, Mercapto-, Ureido-, Nitro-, Halogeno- und/oder Cyanogruppen aufweist.

6. Verfahren nach einem der vorhergehenden Ansprüche, **dadurch gekennzeichnet, dass** das mindestens eine Phenolharz b2) ein Resol ist.

7. Verfahren nach einem der vorhergehenden Ansprüche, **dadurch gekennzeichnet, dass** die Zusammensetzung B die Komponenten b1) und b2) in einem Gewichtverhältnis von 1 : 1 bis 10 : 1 umfasst.

8. Verfahren nach einem der vorhergehenden Ansprüche, **dadurch gekennzeichnet, dass** in der Zusammensetzung B die Konzentration von b1) und b2) insgesamt im Bereich von 20 bis 400 mg/l (berechnet als Feststoffzusatz) liegt.

9. Verfahren nach einem der vorhergehenden Ansprüche, **dadurch gekennzeichnet, dass** die Zusammensetzung B als Stabilisator b3) mindestens ein Triblockcopolymer der Formel I:
PEOₓ-PPO_{y}-PEO_{z} (I)〉 enthält,
wobei x und z jeweils eine ganze Zahl im Bereich von 4 bis 12 sind und y eine ganze Zahl im Bereich von 35 bis 65 ist.

10. Verfahren nach Anspruch 9, **dadurch gekennzeichnet, dass** die Massenkonzentration (berechnet als Feststoffzusatz) des Stabilisators b3) in der Zusammensetzung B das 1 ,5- bis 2,5-fache der Gesamtkonzentration des (Meth)acrylatharzes b1) und des Phenolharzes b2) beträgt.

11. Verfahren nach einem der vorhergehenden Ansprüche, **dadurch gekennzeichnet, dass** die Zusammensetzung B zusätzlich noch mindestens eine Verbindung b4) der Formel II
R¹O-(CH₂)ₓ-Z-(CH₂)_{y}-OR² (II),
enthält, wobei R¹ und R² jeweils unabhängig voneinander H oder eine HO-(CH₂)_{w}-Gruppe mit w ≥ 2 sind, x und y jeweils unabhängig voneinander 1 bis 4 sind, und Z ein S-Atom oder eine C-C-Dreifachbindung ist.

12. Verfahren nach einem der vorhergehenden Ansprüche, **dadurch gekennzeichnet, dass** die Zusammensetzung B als zusätzliche Komponente b5) noch mindestens eine Molybdänverbindung enthält.

13. Verfahren nach einem der vorhergehenden Ansprüche, **dadurch gekennzeichnet, dass** die Zusammensetzung A zusätzlich noch a2) mindestens eine Verbindung ausgewählt aus der Gruppe bestehend aus Organoalkoxysilanen, Organosilanolen, Polyorganosilanolen, Organosiloxanen und Polyorganosiloxanen umfasst.

14. Verfahren nach einem der vorhergehenden Ansprüche, **dadurch gekennzeichnet, dass** die Zusammensetzung A zusätzlich als Komponente a3) 0,1 bis 5 g/l an Zinkkationen, 5 bis 50 mg/l an Kupferkationen und/oder 5 bis 50 mg/l an Cerkationen und/oder 10 bis 100 mg/l mindestens einer Molybdänverbindung (berechnet als Molybdän) umfasst.

15. Verfahren nach einem der vorhergehenden Ansprüche, **dadurch gekennzeichnet, dass** die metallische Oberfläche Stahl und/oder verzinkten Stahl enthält.

16. Wässrige Zusammensetzung B zur Verbesserung der korrosionsschützenden Vorbehandlung einer metallischen Oberfläche, welche Stahl, verzinkten Stahl, Magnesium und/oder eine Zink-Magnesium-Legierung enthält, wie in einem der Ansprüche 1 bis 12 definiert.

17. Konzentrat, **dadurch gekennzeichnet, dass** aus ihm durch Verdünnen mit Wasser eine Zusammensetzung B nach Anspruch 16 hergestellt werden kann.

18. Metallische Oberfläche, welche Stahl, verzinkten Stahl, Magnesium und/oder eine Zink-Magnesium-Legierung enthält, **dadurch gekennzeichnet, dass** sie mit dem Verfahren nach Anspruch 2 beschichtet wurde und die ausgebildete Beschichtung ein mittels RFA bestimmtes Schichtgewicht aufweist von:
i) 5 bis 500 mg/m² bezogen nur auf Komponente a1) (berechnet als Zirkonium).

19. Verwendung eines mit dem Verfahren nach Anspruch 2 beschichteten metallischen Substrats in der Automobilindustrie, für Schienenfahrzeuge, in der Luft- und Raumfahrtindustrie, im Apparatebau, im Maschinenbau, in der Bauindustrie, in der Möbelindustrie, für die Herstellung von Leitplanken, Lampen, Profilen, Verkleidungen oder Kleinteilen, für die Herstellung von Karosserien oder Karosserieteilen, von Einzelkomponenten, vormontierten bzw. verbundenen Elementen, für die Herstellung von Geräten oder Anlagen.

20. Verwendung nach Anspruch 19, **dadurch gekennzeichnet, dass** die Geräte oder Anlagen Haushaltsgeräte, Kontrolleinrichtungen, Prüfeinrichtungen oder Konstruktionselemente sind.

## Claims

1. Process for the anticorrosion pretreatment of a metallic surface comprising steel, galvanized steel, aluminium, an aluminium alloy, magnesium and/or a zinc-magnesium alloy, **characterized in that** the metallic surface is brought into contact with
i) an acidic aqueous composition A which comprises a1) at least one compound selected from the group consisting of titanium, zirconium and hafnium compounds, and
ii) an aqueous composition B which comprises b1) at least one (meth)acrylate resin and b2) at least one phenolic resin,
wherein the metallic surface is brought into contact firstly with the composition A and then with the composition B and wherein the at least one (meth)acrylate resin b1) is a copolymer of a methacrylic ester and of acrylic acid.

2. Process for the anticorrosion pretreatment of a metallic surface comprising steel, galvanized steel, aluminium, an aluminium alloy, magnesium and/or a zinc-magnesium alloy, **characterized in that** the metallic surface is brought into contact with
i) an acidic aqueous composition A which comprises a1) at least one compound selected from the group consisting of titanium, zirconium and hafnium compounds, and
ii) an aqueous composition B which comprises b1) at least one (meth)acrylate resin and b2) at least one phenolic resin,
wherein the metallic surface is brought into contact
a) firstly with the composition B and then with the composition A and/or
b) simultaneously with the composition A and the composition B,
and wherein the at least one (meth)acrylate resin b1) is a copolymer of a methacrylic ester and of acrylic acid.

3. Process according to Claim 1 or 2, **characterized in that** the at least one (meth)acrylate resin b1) is a copolymer of methyl methacrylate and acrylic acid.

4. Process according to Claim 3, **characterized in that** the at least one (meth)acrylate resin b1) comprises 80 to 98% by weight of methyl methacrylate and 2 to 20% by weight of acrylic acid (total: 100% by weight).

5. Process according to any of the preceding claims, **characterized in that** the at least one (meth)acrylate resin b1) additionally comprises hydroxyl, silyl, alkyl, aryl, heteroalkyl, heteroaryl, thio, amino, amide, nitrile, epoxy, mercapto, ureido, nitro, halo and/or cyano groups.

6. Process according to any of the preceding claims, **characterized in that** the at least one phenolic resin b2) is a resole.

7. Process according to any of the preceding claims, **characterized in that** the composition B comprises the components b1) and b2) in a weight ratio of from 1:1 to 10:1.

8. Process according to any of the preceding claims, **characterized in that** the concentration of b1) and b2) in total in the composition B is in the range from 20 to 400 mg/l (calculated as solid addition).

9. Process according to any of the preceding claims, **characterized in that** the composition B comprises as stabilizer b3) at least one triblock copolymer of the formula I:
PEOₓ-PPO_{y}-PEO_{z} (I),
where x and z in each case are an integer in the range from 4 to 12 and y is an integer in the range from 35 to 65.

10. Process according to Claim 9, **characterized in that** the mass concentration (calculated as solid addition) of the stabilizer b3) in the composition B is from 1.5 to 2.5 times the total concentration of the (meth)acrylate resin b1) and of the phenolic resin b2).

11. Process according to any of the preceding claims, **characterized in that** the composition B additionally comprises at least one compound b4) of the formula II
R¹O-(CH₂)ₓ-Z-(CH₂)_{y}-OR² (II),
where R¹ and R² in each case independently of one another are H or a group HO-(CH₂)_{w} with w ≥ 2, x and y in each case independently of one another are 1 to 4, and Z is a sulfur atom or a C-C triple bond.

12. Process according to any of the preceding claims, **characterized in that** the composition B comprises at least one molybdenum compound as additional component b5) .

13. Process according to any of the preceding claims, **characterized in that** the composition A additionally comprises a2) at least one compound selected from the group consisting of organoalkoxysilanes, organosilanols, polyorganosilanols, organosiloxanes and polyorganosiloxanes.

14. Process according to any of the preceding claims, **characterized in that** the composition A additionally comprises from 0.1 to 5 g/l of zinc cations, from 5 to 50 mg/l of copper cations and/or from 5 to 50 mg/l of cerium cations and/or from 10 to 100 mg/l of at least one molybdenum compound (calculated as molybdenum) as component a3).

15. Process according to any of the preceding claims, **characterized in that** the metallic surface comprises steel and/or galvanized steel.

16. Aqueous composition B for improving the anticorrosion pretreatment of a metallic surface comprising steel, galvanized steel, magnesium and/or a zinc-magnesium alloy as defined in any of Claims 1 to 12.

17. Concentrate, **characterized in that** a composition B according to Claim 16 can be produced therefrom by dilution with water.

18. Metallic surface comprising steel, galvanized steel, magnesium and/or a zinc-magnesium alloy, **characterized in that** it has been coated by the process according to Claim 2 and the coating formed has a layer weight determined by means of XRF of:
i) from 5 to 500 mg/m² based only on component a1) (calculated as zirconium).

19. Use of a metallic substrate coated by the process according to Claim 2 in the automobile industry, for rail vehicles, in the aerospace industry, in apparatus construction, in mechanical engineering, in the building industry, in the furniture industry, for the production of crash barriers, lamps, profiles, cladding or small parts, for the production of bodywork or bodywork parts, of individual components, preinstalled or joined elements, for the production of apparatuses or plants.

20. Use according to Claim 19, **characterized in that** the apparatuses or plants are domestic appliances, control devices, testing devices or construction elements.

## Revendications

1. Procédé de prétraitement de protection contre la corrosion d'une surface métallique qui contient de l'acier, de l'acier galvanisé, de l'aluminium, un alliage d'aluminium, du magnésium et/ou un alliage de zinc-magnésium, **caractérisé en ce que** la surface métallique est mise en contact
i) avec une composition aqueuse acide A, qui a1) comprend au moins un composé choisi dans le groupe constitué par des composés du titane, du zirconium et du hafnium, et
ii) avec une composition aqueuse B, qui b1) comprend au moins une résine de (méth)acrylate et b2) au moins une résine phénolique,
la surface métallique étant mise en contact d'abord avec la composition A et ensuite avec la composition B et l'au moins une résine de (méth)acrylate b1) étant un copolymère d'acide acrylique et d'un ester d'acide méthacrylique.

2. Procédé de prétraitement de protection contre la corrosion d'une surface métallique qui contient de l'acier, de l'acier galvanisé, de l'aluminium, un alliage d'aluminium, du magnésium et/ou un alliage de zinc-magnésium, **caractérisé en ce que** la surface métallique est mise en contact
i) avec une composition aqueuse acide A, qui a1) comprend au moins un composé choisi dans le groupe constitué par des composés du titane, du zirconium et du hafnium, et
ii) avec une composition aqueuse B, qui b1) comprend au moins une résine de (méth)acrylate et b2) au moins une résine phénolique,
la surface métallique
a) étant mise en contact d'abord avec la composition B et ensuite avec la composition A et/ou
b) étant mise en contact simultanément avec la composition A et la composition B,
et l'au moins une résine de (méth)acrylate b1) étant un copolymère d'acide acrylique et d'un ester d'acide méthacrylique.

3. Procédé selon la revendication 1 ou 2, **caractérisé en ce que** l'au moins une résine de (méth)acrylate b1) est un copolymère de méthacrylate de méthyle et d'acide acrylique.

4. Procédé selon la revendication 3, **caractérisé en ce que** l'au moins une résine de (méth)acrylate b1) contient 80 à 98 % en poids de méthacrylate de méthyle et 2 à 20 % en poids d'acide acrylique (somme : 100 % en poids).

5. Procédé selon l'une quelconque des revendications précédentes, **caractérisé en ce que** l'au moins une résine de (méth)acrylate b1) présente de plus des groupes hydroxy, silyle, alkyle, aryle, hétéroalkyle, hétéroaryle, thio, amino, amide, nitrile, époxy, mercapto, uréido, nitro, halogène et/ou cyano.

6. Procédé selon l'une quelconque des revendications précédentes, **caractérisé en ce que** l'au moins une résine phénolique b2) est un résol.

7. Procédé selon l'une quelconque des revendications précédentes, **caractérisé en ce que** la composition B comprend les composants b1) et b2) en un rapport en poids de 1 : 1 à 10 : 1.

8. Procédé selon l'une quelconque des revendications précédentes, **caractérisé en ce que** la concentration de b1) et b2) dans la composition B se situe au total dans la plage de 20 à 400 mg/l (calculée comme additif solide).

9. Procédé selon l'une quelconque des revendications précédentes, **caractérisé en ce que** la composition B contient en tant que stabilisant b3) au moins un copolymère tribloc de formule I :
**PEOₓ-PPO_{y}-PEO_{z}** (I),
x et z étant à chaque fois un nombre entier dans la plage de 4 à 12 et y étant un nombre entier dans la plage de 35 à 65.

10. Procédé selon la revendication 9, **caractérisé en ce que** la concentration massique (calculée comme additif solide) du stabilisant b3) dans la composition B est 1,5 à 2,5 fois la concentration totale de la résine de (méth)acrylate b1) et de la résine phénolique b2).

11. Procédé selon l'une quelconque des revendications précédentes, **caractérisé en ce que** la composition B contient de plus encore au moins un composé b4) de formule II
**R¹O-(CH₂)ₓ-Z-(CH₂)_{y}-OR²** (II),
R¹ et R² étant à chaque fois indépendamment l'un de l'autre H ou un groupe HO-(CH₂)_{w} avec w ≥ 2, x et y étant à chaque fois indépendamment l'un de l'autre de 1 à 4, et Z étant un atome de S ou une triple liaison C-C.

12. Procédé selon l'une quelconque des revendications précédentes, **caractérisé en ce que** la composition B contient en tant que composant supplémentaire b5) encore au moins un composé du molybdène.

13. Procédé selon l'une quelconque des revendications précédentes, **caractérisé en ce que** la composition A contient de plus encore a2) au moins un composé choisi dans le groupe constitué par des organoalcoxysilanes, des organosilanols, des polyorganosilanols, des organosiloxanes et des polyorganosiloxanes.

14. Procédé selon l'une quelconque des revendications précédentes, **caractérisé en ce que** la composition A comprend de plus en tant que composant a3) 0,1 à 5 g/l de cations zinc, 5 à 50 mg/l de cations cuivre et/ou 5 à 50 mg/l de cations cérium et/ou 10 à 100 mg/l d'au moins un composé du molybdène (calculé comme molybdène) .

15. Procédé selon l'une quelconque des revendications précédentes, **caractérisé en ce que** la surface métallique contient de l'acier et/ou de l'acier galvanisé.

16. Composition aqueuse B pour l'amélioration du prétraitement de protection contre la corrosion d'une surface métallique qui contient de l'acier, de l'acier galvanisé, du magnésium et/ou un alliage de zinc-magnésium, comme définie dans l'une quelconque des revendications 1 à 12.

17. Concentré, **caractérisé en ce qu'**une composition B selon la revendication 16 peut être préparée à partir de celui-ci par dilution avec de l'eau.

18. Surface métallique qui contient de l'acier, de l'acier galvanisé, du magnésium et/ou un alliage de zinc-magnésium, **caractérisée en ce qu'**elle a été revêtue par un procédé selon la revendication 2 et le revêtement formé présente un poids moyen de couche déterminé par XRF de :
i) 5 à 500 mg/m² par rapport à seulement le composant a1) (calculé comme zirconium).

19. Utilisation d'un substrat métallique revêtu par le procédé selon la revendication 2 dans l'industrie automobile, pour des véhicules ferroviaires, dans l'industrie spatiale et aérospatiale, dans la construction d'appareils, dans la construction de machines, dans l'industrie de la construction, dans l'industrie des meubles, pour la fabrication de glissières de sécurité, de lampes, de profilés, de garnitures ou de petites pièces, pour la fabrication de carrosseries ou de pièces de carrosserie, de composants individuels, d'éléments prémontés ou assemblés, pour la fabrication d'appareils ou d'installations.

20. Utilisation selon la revendication 19, **caractérisée en ce que** les appareils ou les installations sont des appareils d'entretien ménagers, des dispositifs de commande, des dispositifs d'essai ou des éléments de construction.
